(19) **Europäisches Patentamt**

**European Patent Office**

**Office européen des brevets**

(11) **EP 1 518 772 B1**

(12) **FASCICULE DE BREVET EUROPEEN**

(45) Date de publication et mention
de la délivrance du brevet:
**23.11.2005 Bulletin 2005/47**

(51) Int Cl.⁷: **B60T 13/57**

(21) Numéro de dépôt: **03292364.1**

(22) Date de dépôt: **26.09.2003**

(54) **Amplificateur de force a depression**

Unterdruckbremskraftverstärker

Force Booster

(84) Etats contractants désignés:
**AT BE BG CH CY CZ DE DK EE ES FI FR GB GR
HU IE IT LI LU MC NL PT RO SE SI SK TR**

(43) Date de publication de la demande:
**30.03.2005 Bulletin 2005/13**

(73) Titulaire: **Delphi Technologies, Inc.
Troy, MI 48007 (US)**

(72) Inventeurs:
• **Trenado, Guillaume
77090 Collegien (FR)**

• **Castel , Philippe
75005 Paris (FR)**

(74) Mandataire: **Abello, Michel
Cabinet Peuscet,
78, avenue Raymond Poincaré
75116 Paris (FR)**

(56) Documents cités:
**GB-A- 2 230 575**      **US-A- 4 777 865**
**US-A- 5 746 107**      **US-A- 5 839 344**
**US-A1- 2003 037 667**

## Description

La présente invention concerne un amplificateur à dépression, notamment pour véhicule automobile.

Les amplificateurs de force à dépression sont bien connus et sont utilisés notamment comme servomoteur pour l'assistance au freinage dans les systèmes de freinage des véhicules automobiles (voir par exemple les documents FR 2 151 009, FR 2 794 090 et US 5 873 296. Le document US 2003/0037667 est considéré comme étant le plus proche état de la technique.

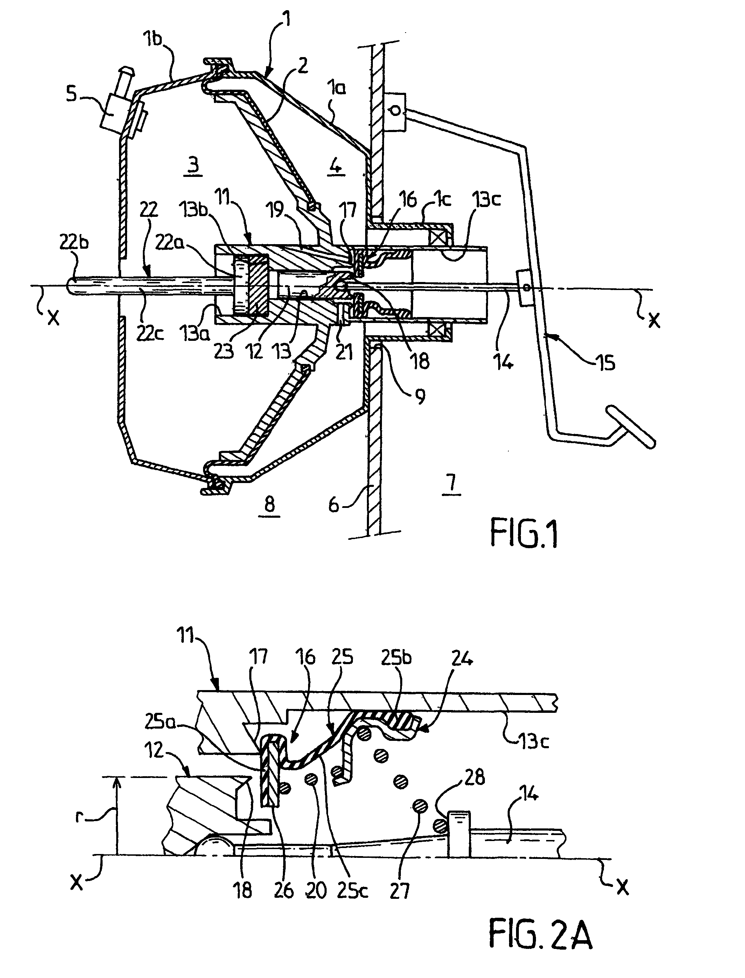

La figure 1 des dessins annexés montre, de manière schématique, un amplificateur de force de freinage de type classique à dépression. L'amplificateur de force représenté sur la figure 1 comprend une enceinte 1, qui est usuellement composée d'un carter arrière 1a et d'un carter avant 1b assemblés l'un à l'autre. Une membrane 2 divise le volume intérieur de l'enceinte 1 en une chambre avant 3 à pression relativement basse (une pression inférieure à la pression atmosphérique), et en une chambre arrière ou chambre de travail 4 à pression relativement haute (usuellement la pression atmosphérique). Le carter avant 1b de l'enceinte 1 est muni d'un raccord 5, par lequel la chambre 3 peut être reliée, via un tuyau approprié non montré, à une source de dépression. Le carter arrière 1a de l'enceinte 1 est fixé, par des moyens non montrés, à une cloison 6 séparant l'habitacle 7 d'un véhicule par rapport au compartiment moteur 8 dudit véhicule. Le carter arrière 1a comporte une partie cylindrique 1c qui passe à travers une ouverture 9 de la cloison 6 et qui débouche dans l'habitacle 7.

Dans l'enceinte 1 se trouve un piston 11, qui est attaché à la membrane 2 et qui est mobile axialement dans l'enceinte 1 et dans la partie cylindrique 1c du carter arrière 1a. Un plongeur 12 est monté coulissant dans un alésage axial 13 du piston 11 et peut être déplacé dans ledit alésage, sous la commande d'un organe d'entrée de force 14, depuis une position stable de repos montrée dans la figure 1, jusqu'à une position instable de travail, vers la gauche dans la figure 1, c'est-à-dire vers le carter avant 1b. L'organe d'entrée de force 14 peut être constitué par une tige de commande reliée à la pédale de frein 15 du véhicule.

L'amplificateur de force comporte en outre un clapet 16 apte à coopérer avec des sièges annulaires coaxiaux 17 et 18 formés respectivement sur le piston 11 et sur le plongeur 12. Quand le moteur du véhicule est arrêté et que le plongeur 12 est dans la position de repos (figure 1), c'est-à-dire quand la pédale de frein 15 n'est pas enfoncée, le clapet 16 est en appui sur les deux sièges 17 et 18 et les deux chambres 3 et 4 de l'enceinte sont isolées l'une de l'autre. Quand le moteur du véhicule tourne, le plongeur 12 étant toujours dans la position de repos (pédale de frein 15 non enfoncée), une dépression règne dans la chambre 3 de l'enceinte 1 et provoque un léger déplacement du piston 11 vers la gauche, contre l'action d'un ressort non montré, de sorte que le siège 17 s'écarte légèrement du clapet 16. Dans ces conditions, une communication est établie entre les deux chambres 3 et 4 de l'enceinte à travers des passages 19 et 21 formés dans le piston 11.

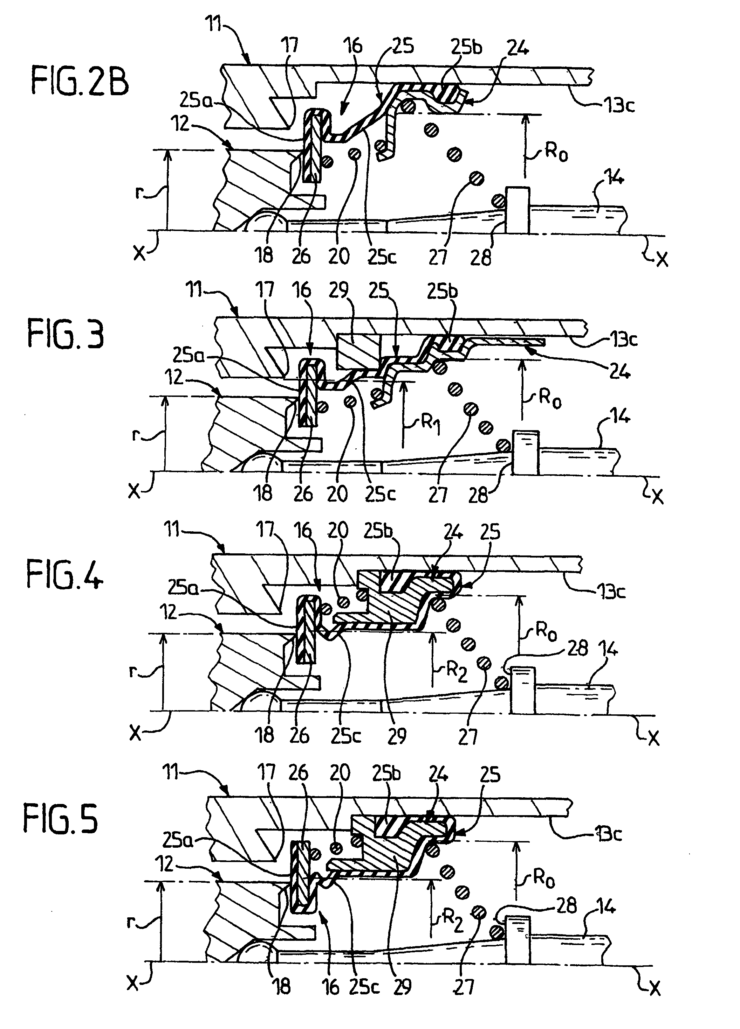

Quand la pédale de frein 15 est enfoncée, la tige de commande 14 pousse le plongeur 12 vers l'avant dans l'alésage 13 du piston 11. Dans ces conditions, le clapet 16 qui est aussi poussé vers l'avant par un ressort (non montré dans la figure 1, mais visible dans les figures 2A et 2B, ressort 20), vient tout d'abord en contact avec le siège 17 pour couper la communication entre les chambres 3 et 4 de l'enceinte 1. Ensuite, le plongeur 12 poursuivant son chemin vers l'avant dans l'alésage 13 sous la poussée de la tige de commande 14, le siège 18 s'écarte du clapet 16, établissant ainsi, via le passage 21, une communication entre la chambre 4 de l'enceinte 1 et l'habitacle 7 où règne la pression atmosphérique (source de pression relativement haute). Du fait de la pression différentielle existant maintenant entre les chambres 3 et 4 de l'enceinte 1, la membrane 2 et le piston 11 sont déplacés vers l'avant, c'est-à-dire vers la gauche dans la figure 1.

L'amplificateur de force comporte en outre une tige de sortie de force 22, encore appelée tige de réaction, ayant une extrémité proximale 22a et une extrémité distale 22b. L'extrémité proximale 22a a usuellement la forme d'un plateau circulaire qui est formé d'une seule pièce avec la tige proprement dite 22c et qui est monté coulissant dans une partie élargie 13a de l'alésage 13 du piston 11. Un disque de réaction 23 élastiquement déformable (extrudable) est disposé dans la partie élargie 13a de l'alésage 13, entre un épaulement annulaire 13b dudit alésage et le plateau 22a de la tige de réaction 22.

En service, quand la pédale de frein 15 est enfoncée, le piston 11 et le plongeur 12 agissent conjointement, par l'intermédiaire du disque de réaction 23, sur le plateau 22a de la tige de réaction 22, dont l'extrémité distale 22b agit à son tour sur le piston primaire non montré d'un maître-cylindre faisant partie du système de freinage du véhicule. Le facteur de multiplication de force de l'amplificateur est déterminé par le rapport entre, d'une part, l'aire totale de contact du disque de réaction 23 avec le piston 11 (aire de l'épaulement annulaire 13b) et avec le plongeur 12 et, d'autre part, l'aire de contact du plongeur 12 avec le disque de réaction 23.

Dans les amplificateurs de force du type décrit ci-dessus, le clapet 16 comprend usuellement un support annulaire 24, généralement en métal, qui porte un élément 25 en matière élastomère, comme montré dans les figures 2A et 2B des dessins annexés. Le support annulaire 24 est placé à distance axiale des deux sièges 17 et 18 dans une partie élargie 13c de l'alésage axial 13 du piston 11. La partie élargie 13c de l'alésage 13 a un diamètre intérieur sensiblement plus grand que le diamètre du siège 17, qui est lui-même plus grand que le diamètre du siège 18 formé sur le plongeur 12, les deux sièges 17 et 18 étant centrés sur l'axe longitudinal X-X du piston 11 et du plongeur 12.

L'élément 25 en matière élastomère comporte une première partie annulaire 25a formant obturateur, une seconde partie annulaire 25b formant joint d'étanchéité entre le support annulaire 24 et la surface cylindrique intérieure de la partie élargie 13c de l'alésage 13 du piston 11, et une troisième partie 25c en forme de manchon qui relie les parties 25a et 25b de l'élément 25 en matière élastomère. Usuellement, un insert métallique 26, en forme de rondelle, est au moins en partie noyé dans la partie 25a de l'élément 25 en matière élastomère. L'insert 26 a un diamètre extérieur plus grand que le diamètre du siège 17 et un diamètre intérieur plus petit que le diamètre du siège 18.

Le ressort 20 susmentionné est usuellement disposé axialement entre le support annulaire 24 et l'insert 26. Cependant, le ressort 20 peut aussi être disposé entre l'insert 26 et un épaulement annulaire non montré formé sur la tige de commande 14. Un autre ressort 27 est usuellement interposé axialement entre le support annulaire 24 et un épaulement annulaire ou un collet 28 formé sur la tige de commande 14. Le ressort 27 sert à ramener en arrière la tige de commande 14 et le plongeur 12 dans leur position de repos lorsque le conducteur cesse d'agir sur la pédale de frein 15.

En service, la surface intérieure de la partie 25c en forme de manchon de l'élément 25 en matière élastomère et une partie de la face arrière (du côté du ressort 20) de la partie 25a de l'élément 25 sont exposées en permanence à une pression relativement haute (la pression atmosphérique). D'un autre côté, la surface extérieure de la partie 25c et une partie de la face avant (tournée vers les sièges 17 et 18) de la partie 25a de l'élément 25 sont exposées à une pression relativement basse dont la valeur est différente selon que la partie 25a de l'élément 25 du clapet 16 est en contact avec le siège 17 ou avec le siège 18. Il en résulte que le clapet 16 est soumis à une pression différentielle différente selon son état. En conséquence, dans un amplificateur de force classique (figure 1) ayant un clapet tel que celui montré dans les figures 2A et 2B, les efforts d'attaque et de retour ont des valeurs nettement différentes.

Plus précisément, l'effort d'attaque encore appelé effort initial est l'effort qu'il faut appliquer à la tige de commande 14, donc au plongeur 12, pour écarter le siège 18 de la partie 25a du clapet 16 lorsque cette partie est en appui contre le siège 17 (figure 2A). La valeur de l'effort initial est donnée par la formule (1) suivante :

$$F_{initial} = F - s.\Delta p \qquad (1)$$

dans laquelle F est la force du ressort 27 et s est la surface effective sur laquelle la pression différentielle $\Delta p$ est appliquée au plongeur 12. La surface s est égale à $\pi r^2$, r étant le rayon du cercle correspondant à l'arête circulaire du siège 18.

L'effort de retour est l'effort qu'il faut appliquer à la tige de commande 14, donc au plongeur 12 accouplé à celle-ci, pour que le plongeur 12 repousse la partie 25a du clapet 16 à l'écart du siège 17 quand la pédale de frein 15 est relâchée (figure 2B). La valeur de l'effort de retour est donnée par la formule (2) suivante :

$$F_{retour} = F - S_0.\Delta p \qquad (2)$$

dans laquelle F est la force du ressort 27 et $S_0$ est la surface effective sur laquelle la pression différentielle $\Delta p$ est appliquée au clapet 16. La surface $S_0$ est égale à $\pi R_0^2$, $R_0$ étant le rayon du cercle à l'endroit duquel la partie 25c de l'élément 25 du clapet 16 vient en contact avec le support 24 comme montré dans la figure 2B.

Il est important d'avoir un effort d'attaque ou effort initial, car cela permet d'avoir une force de réaction sous la pédale de frein 15. Sans cet effort initial, le conducteur ne peut pas doser le début du freinage. Cependant, il est important que l'effort initial ne soit pas trop grand, sinon la moindre opération de freinage devient pénible car il faut alors que le conducteur exerce une forte poussée sur la pédale de frein. D'un autre côté, il est encore plus important d'avoir un effort de retour, car c'est lui qui permet de ramener la pédale de frein 15 de façon certaine à sa position de repos, malgré le poids de la pédale, malgré les frottements qui peuvent se produire au cours de la course de retour du plongeur 12, de la tige de commande 14 et de la pédale de frein 15 et malgré les éventuelles surcharges dues à de la boue ou d'autres saletés susceptibles d'être présentes sur le patin de la pédale de frein 15. En général, les constructeurs d'automobiles demandent que l'amplificateur de force soit capable de fournir un effort de retour d'au moins 2,5 daN, soit 3,5 daN nominal si l'on tient compte d'une tolérance de +/- 1 daN.

Or, plus $R_0$ est grand par rapport à r, plus $S_0$ est grand par rapport à s et, par suite, plus l'écart entre l'effort initial et l'effort de retour est grand puisque cet écart est proportionnel à la quantité $(S_0 - s)$. En conséquence, dans un amplificateur de force ayant un clapet présentant la structure représentée sur les figures 2A et 2B, pour obtenir un effort de retour ayant par exemple une valeur nominale de 3,5 daN, il faudra que l'effort initial ait une valeur nettement supérieure, de l'ordre de 7 à 8 daN avec la même tolérance de +/- 1 daN. On voit donc que l'effort initial peut monter jusqu'à 9 daN, obligeant ainsi le conducteur à exercer une poussée qui est déjà relativement importante au début de chaque opération de freinage.

Un autre problème récurrent qui se pose dans les amplificateurs de force de freinage est d'améliorer leur temps de réponse au début du freinage. Pour cela, il faut augmenter le débit d'air dès que le siège 18 s'écarte de la partie 25a du clapet 16. Cela peut être obtenu en augmentant l'aire de la section de passage de l'air, donc la valeur du rayon r pour un écart donné entre le siège 18 et la partie 25a du clapet 16 et pour une pression différentielle donnée $\Delta p$. Dans ces conditions, si l'on veut que la section d'écoulement de tous les autres passages d'air reste cohérente avec l'augmentation du rayon r de l'arête circulaire du siège 18, il faut également augmenter le rayon de l'arête circulaire du siège 17, ce qui entraîne à son tour une augmentation du diamètre intérieur de la partie élargie 13c de l'alésage 13 afin de permettre une augmentation correspondante de la section d'écoulement du passage 19 qui débouche à un emplacement situé radialement entre l'arête du siège 17 et la surface périphérique intérieure de la partie élargie 13c de l'alésage 13. Il en résulte alors une augmentation substantielle du rayon $R_0$ par rapport au rayon r, donc une augmentation de la quantité $(S_0 - s)$, ce qui accroît encore la différence entre l'effort d'attaque et l'effort de retour. Etant donné que, d'après la formule (2), une augmentation du rayon $R_0$, donc de la surface $S_0$ entraîne une diminution de l'effort de retour, si l'on veut garder un effort de retour ayant une valeur nominale de par exemple 3,5 daN, il faudra augmenter par exemple la force F du ressort 27 et l'effort initial aura une valeur encore plus grande, par exemple de 11 ou 12 daN pour assurer la valeur de 3,5 daN pour l'effort de retour. Une valeur aussi élevée de l'effort d'attaque n'est généralement pas acceptable.

Pour résoudre les problèmes exposés ci-dessus, une première solution connue consiste à utiliser un clapet ayant une conception différente de celle représentée sur les figures 2A et 2B. Plus précisément, la partie formant obturateur du clapet est conçue pour coulisser de manière étanche dans la partie élargie de l'alésage du piston, de manière à former en arrière de la partie formant obturateur du clapet une chambre de compensation de pression qui communique avec l'espace annulaire situé entre les deux sièges, devant la partie formant obturateur du clapet, à travers au moins un orifice percé dans ladite partie formant obturateur (voir les documents WO 94/04403, WO 94/29153 et WO 96/15930).

Une autre solution connue pour résoudre les problèmes sus-indiqués consiste à disposer une bague 29 en contact étroit avec la partie élargie 13c de l'alésage axial 13 du piston 11 et avec une partie de la surface extérieure de la troisième partie 25c de l'élément 25 en matière élastomère comme montré dans la figure 3 des dessins annexés (voir aussi la demande de brevet américain publiée sous le n° US-2003/0037667 A1). Dans ce cas, bien que cela ne soit pas décrit dans le document US sus-indiqué, la bague 29 permet de réduire l'action de la pression relativement basse sur la surface extérieure de la partie 25c en forme de manchon de l'élément 25 en matière élastomère. Il en résulte que pour un amplificateur de force ayant un piston 11 dont l'alésage 13 a une partie élargie 13c de même diamètre que celui des figures 2A et 2B, et dans lequel la pression

différentielle $\Delta p$ et la force F du ressort 27 ont les mêmes valeurs que dans l'amplificateur de force des figures 2A et 2B, on obtient grâce à la bague 29 un effort de retour plus grand que celui qui est obtenu avec le clapet sans bague représenté dans les figures 2A et 2B. En effet, dans le cas de la figure 3, l'effort de retour est donné par la formule (3) suivante :

$$F_{retour} = F - S_1 . \Delta p \qquad (3)$$

dans laquelle la surface $S_1$ est égale à $\pi R_1^2$, $R_1$ étant le rayon d'un cercle correspondant approximativement au cercle à l'endroit duquel la partie 25c de l'élément 25 en matière élastomère qui se trouve à l'intérieur de la bague 29 vient en contact avec le support annulaire 24. Pour faciliter la comparaison de l'arrangement avec bague 29 de la figure 3 et de l'arrangement sans bague des figures 2A et 2B, le rayon $R_0$ des figures 2A et 2B a également été reporté dans la figure 3. On peut ainsi voir que le rayon $R_1$ a une valeur sensiblement plus faible que celle du rayon $R_0$ et que, par suite, l'effort de retour obtenu lorsque la bague 29 est présente est plus grand que l'effort de retour obtenu en l'absence de bague. Ceci permet de réduire l'écart entre l'effort initial et l'effort de retour. En conséquence, pour un effort de retour ayant une valeur imposée, on obtiendra un effort initial qui a certes une valeur sensiblement plus grande que celle de l'effort de retour, mais qui pourra cependant être gardée dans des limites acceptables.

Toutefois, l'arrangement avec bague montré dans la demande de brevet US 2003/0037667 A1 a pour inconvénient que la bague constitue une pièce additionnelle, donc des coûts additionnels non seulement sur le plan du nombre des pièces détachées, mais également sur le plan du stockage des pièces détachées, de la gestion des stocks, du transport des pièces détachées et de leur assemblage. En outre, la réduction de la différence entre l'effort initial et l'effort de retour qui peut être obtenue grâce à la présence de la bague est relativement limitée.

La présente invention a donc pour but de fournir un amplificateur de force dans lequel l'écart entre l'effort initial et l'effort de retour peut être réduit de manière substantielle sans augmenter le nombre de pièces.

A cet effet, l'invention fournit un amplificateur de force à dépression comprenant :

a) un piston actionnable par une pression différentielle entre deux chambres d'une enceinte,
b) un plongeur déplaçable dans un alésage axial du piston par un organe d'entrée de force,
c) des premier et second sièges annulaires coaxiaux formés respectivement sur le piston et sur le plongeur,
d) un clapet apte à coopérer sélectivement avec les premier et second sièges pour faire varier ladite pression différentielle selon la position axiale du plongeur par rapport au piston, ledit clapet comportant :

d1) un support annulaire placé à distance axiale des premier et second sièges dans une partie élargie de l'alésage axial du piston, et

d2) un élément en matière élastomère ayant une première partie annulaire formant obturateur, qui est apte à être mise axialement en appui sélectivement contre les premier et second sièges, une seconde partie annulaire formant joint d'étanchéité entre le support annulaire et la partie élargie de l'alésage axial du piston, et une troisième partie en forme de manchon qui relie lesdites première et seconde parties de l'élément en matière élastomère et qui a une surface intérieure exposée en permanence à une pression relativement haute et une surface extérieure exposée à une pression relativement basse,

e) une bague en contact étroit avec la partie élargie de l'alésage axial et avec une partie de la surface extérieure de la troisième partie de l'élément en matière élastomère,

caractérisé en ce que le support annulaire est disposé du côté de la surface extérieure de la troisième partie de l'élément en matière élastomère et est réalisé d'une seule pièce avec la bague.

Etant donné que le support annulaire et la bague sont formés d'une seule pièce, l'amplificateur de force selon l'invention comporte le même nombre de pièces que celui décrit plus haut en référence aux figures 1, 2A et 2B. En outre, comme cela sera montré plus loin, il est possible de réduire substantiellement l'écart entre l'effort initial et l'effort de retour, ces deux efforts pouvant avoir sensiblement la même valeur.

De préférence, la bague-support annulaire a un diamètre intérieur dont la valeur est comprise entre les valeurs des diamètres des premier et second sièges.

Dans un mode de réalisation de l'invention, la troisième partie en forme de manchon de l'élément en matière élastomère a dans la région du diamètre intérieur de la bague-support annulaire, un diamètre intérieur dont la valeur est sensiblement égale à la valeur du diamètre du second siège. Dans ces conditions, l'effort initial peut être sensiblement égal à l'effort de retour.

Dans un autre mode de réalisation de l'invention, la troisième partie en forme de manchon se raccorde à la première partie annulaire formant obturateur de l'élément en matière élastomère dans la région extérieure de ladite première partie.

Dans encore un autre mode de réalisation de l'invention, la troisième partie en forme de manchon se raccorde à la première partie annulaire formant obturateur de l'élément en matière élastomère dans la région intérieure de ladite première partie.

Dans l'un ou l'autre des modes de réalisation précédents, un ressort de compression est disposé axialement entre la bague-support annulaire et la première partie formant obturateur de l'élément en matière élastomère, de sorte que la troisième partie en forme de manchon qui se raccorde à ladite première partie de l'élément est située radialement à l'intérieur du ressort de compression.

D'autres caractéristiques et avantages de l'invention ressortiront mieux au cours de la description suivante de deux modes de réalisation de l'invention donnés à titre d'exemple en référence aux dessins annexés, sur lesquels :

- la figure 1 est une vue schématique en coupe verticale d'un amplificateur de force de freinage classique à dépression, dans lequel l'invention peut être mise en oeuvre ;
- la figure 2A montre, à plus grande échelle, un détail de la figure 1, l'élément obturateur du clapet de l'amplificateur de force à dépression étant représenté dans un état correspondant à un état ouvert du clapet d'air et à un état fermé du clapet de vide ;
- la figure 2B est une vue correspondant à la figure 2A, l'élément obturateur du clapet de l'amplificateur de force à dépression étant représenté dans un état correspondant à un état fermé du clapet d'air et à un état ouvert du clapet de vide ;
- la figure 3 est une vue semblable à la figure 2B, montrant un autre mode de réalisation connu ;
- la figure 4 est une vue semblable aux figures 2B et 3, montrant un premier mode de réalisation de l'invention ;
- la figure 5 est une vue semblable à la figure 4 montrant un deuxième mode de réalisation de l'invention.

Dans toutes les figures, les éléments semblables ou qui jouent le même rôle sont désignés par les mêmes numéros de référence.

Dans le premier mode de réalisation de l'invention représenté sur la figure 4, le clapet 16 de l'amplificateur de force comporte aussi un support annulaire 24 et un élément 25 en matière élastomère, et l'amplificateur de force comporte aussi une bague 29 en contact étroit avec la partie élargie 13c de l'alésage axial du piston 11 et avec une partie de la surface extérieure de la partie 25c de l'élément 25 en matière élastomère, comme dans le mode de réalisation connu de la figure 3. Toutefois, dans ce cas, le support annulaire 24 est disposé, comme la bague 29, du côté de la surface extérieure de la partie 25c de l'élément 25 et il est réalisé d'une seule pièce avec la bague 29.

Dans ces conditions, il est possible de réduire d'une unité le nombre de pièces détachées par rapport au mode de réalisation connu de la figure 3. En outre, il est également possible de réduire la valeur du rayon

$R_2$ de la surface effective sur laquelle s'applique la pression différentielle $\Delta p$ quand le clapet d'air formé par la partie obturateur 25a de l'élément 25 en matière élastomère et par le siège 18 est fermé, en comparaison des valeurs des rayons $R_0$ et $R_1$ obtenues dans les modes de réalisation connus représentés respectivement sur les figures 2B et 3. Or, là encore, la valeur de l'effort de retour est donnée par la formule (4) suivante :

$$F_{retour} = F - S_2.\Delta p \qquad (4)$$

dans laquelle la valeur de la surface effective $S_2$ sur laquelle s'applique la pression différentielle $\Delta p$ est égale à $\pi R_2^2$. Puisque $R_2$ a une valeur plus petite que $R_0$ et $R_1$, on voit que, pour des valeurs données de la pression différentielle $\Delta p$ et de la force F du ressort 27, l'invention permet d'obtenir un effort de retour plus grand que celui obtenu avec les modes de réalisation connus des figures 2B et 3, sans avoir nécessairement un effort initial ou effort d'attaque important.

De préférence, l'ensemble bague-support annulaire (24, 29) a un diamètre intérieur dont la valeur est comprise entre les valeurs des diamètres des sièges 17 et 18. Le diamètre intérieur de la bague-support annulaire (24, 29) et l'épaisseur de paroi de la partie 25c de l'élément 25 en matière élastomère peuvent être choisis par exemple de telle façon que ladite partie 25c ait, dans la région du diamètre intérieur de la bague-support annulaire (24, 29), un diamètre intérieur dont la valeur est sensiblement égale à la valeur du diamètre du siège 18. Dans ces conditions, il est possible de faire en sorte que le rayon $R_2$ soit pratiquement égal au rayon r et, par conséquent, que l'effort initial et l'effort de retour de l'amplificateur de force aient sensiblement la même valeur.

On notera que dans le mode de réalisation de la figure 4, le ressort de compression 20 est disposé axialement entre la bague-support annulaire (24, 29) et la partie 25a formant obturateur de l'élément 25 en matière élastomère. Autrement dit, le ressort de compression 20 est disposé radialement à l'extérieur par rapport à la partie 25c de l'élément 25 en matière élastomère qui est en contact avec le diamètre intérieur de la bague-support annulaire (24, 29). Une telle disposition facilite la réduction du diamètre intérieur de la bague-support annulaire (24, 29), donc la réduction du rayon $R_2$ et, par conséquent, l'augmentation de l'effort de retour de l'amplificateur de force. Il devient même possible de réduire le diamètre intérieur de la bague-support annulaire (24, 29) au point que le rayon $R_2$ soit plus petit que le rayon r et que, par suite, l'effort de retour soit plus grand que l'effort initial, si on le désire.

Toutefois, la disposition du ressort 20 comme montré dans la figure 4 n'est pas indispensable pour la mise en oeuvre de l'invention. En effet, le ressort 20 pourrait être disposé radialement à l'intérieur par rapport à la partie 25c de l'élément 25 en matière élastomère et il pourrait prendre axialement appui d'une part contre l'insert 26 et d'autre part contre un épaulement (non montré) de la tige de commande 14.

On notera également que, dans le mode de réalisation représenté sur la figure 4, la partie 25c de l'élément 25 en matière élastomère se raccorde à la partie annulaire 25a dudit élément 25 dans la région extérieure de ladite partie annulaire 25a. Autrement dit, la partie annulaire 25a et la partie 25c de l'élément 25 en matière élastomère enrobent la région périphérique extérieure de l'insert 26 en forme de rondelle.

Le second mode de réalisation de l'invention représenté sur la figure 5 diffère de celui qui est représenté sur la figure 4 par le fait que la partie 25c de l'élément 25 en matière élastomère se raccorde à la partie annulaire 25a dudit élément 25 dans la région intérieure de ladite partie annulaire 25a. Autrement dit, dans ce cas, les parties 25a et 25c de l'élément 25 enrobent l'insert 26 en forme de rondelle dans sa région périphérique intérieure. Dans ce cas, le ressort de compression 20 prend axialement appui directement sur la face arrière de l'insert 26. Cependant, là encore, comme cela a déjà été indiqué à propos du mode de réalisation de la figure 4, le ressort 20 pourrait être disposé radialement à l'intérieur de la partie 25c de l'élément 25 en matière élastomère.

Il est du reste bien entendu que les modes de réalisation de l'invention qui ont été décrits ci-dessus ont été donnés à titre d'exemples purement indicatifs et nullement limitatifs, et que de nombreuses modifications peuvent être apportées par l'homme de l'art sans pour autant sortir du cadre de l'invention.

## Revendications

1.  Amplificateur de force à dépression comprenant :

    un piston (11) actionnable par une pression différentielle entre deux chambres (3, 4) d'une enceinte (1),
    un plongeur (12) déplaçable dans un alésage axial (13) du piston (11) par un organe d'entrée de force (14, 15),
    des premier et second sièges annulaires coaxiaux (17, 18) formés respectivement sur le piston (11) et sur le plongeur (12),
    un clapet (16) apte à coopérer sélectivement avec les premier et second sièges pour faire varier ladite pression différentielle selon la position axiale du plongeur par rapport au piston, ledit clapet comportant :

    un support annulaire (24) placé à distance axiale des premier et second sièges (17, 18) dans une partie élargie (13c) de l'alésage axial (13) du piston (11), et
    un élément (25) en matière élastomère ayant une première partie annulaire (25a) formant obturateur, qui est apte à être mise axialement en appui sélectivement contre les premier et second sièges (17, 18), une seconde partie annulaire (25b) formant joint d'étanchéité entre le support annulaire (24) et la partie élargie (13c) de l'alésage axial (13) du piston (11), et une troisième partie (25c) en forme de manchon qui relie lesdites première et seconde parties (25a, 25b) de l'élément (25) en matière élastomère et qui a une surface intérieure exposée en permanence à une pression relativement haute et une surface extérieure exposée à une pression relativement basse,

une bague (29) en contact étroit avec la partie élargie (13c) de l'alésage axial (13) et avec une partie de la surface extérieure de la troisième partie (25c) de l'élément (25) en matière élastomère,

**caractérisé en ce que** le support annulaire (24) est disposé du côté de la surface extérieure de la troisième partie (25c) de l'élément (25) en matière élastomère et est réalisé d'une seule pièce avec la bague (29).

2. Amplificateur de force selon la revendication 1, **caractérisé en ce que** la bague-support annulaire (24, 29) a un diamètre intérieur dont la valeur est comprise entre les valeurs des diamètres des premier et second sièges (17, 18).

3. Amplificateur de force selon la revendication 2, **caractérisé en ce que** la troisième partie (25c) en forme de manchon de l'élément (25) en matière élastomère a dans la région du diamètre intérieur de la bague-support annulaire (24, 29), un diamètre intérieur dont la valeur est sensiblement égale à la valeur du diamètre du second siège (18).

4. Amplificateur de force selon l'une quelconque des revendications 1 à 3, **caractérisé en ce que** la troisième partie (25c) en forme de manchon se raccorde à la première partie annulaire (25a) formant obturateur de l'élément (25) en matière élastomère dans la région extérieure de ladite première partie (25a).

5. Amplificateur de force selon l'une quelconque des revendications 1 à 3, **caractérisé en ce que** la troisième partie (25c) en forme de manchon se raccorde à la première partie annulaire (25a) formant obturateur de l'élément (25) en matière élastomère dans la région intérieure de ladite première partie (25a).

6. Amplificateur de force selon l'une quelconque des revendications 1 à 5, **caractérisé en ce qu'**un ressort de compression (20) est disposé axialement entre la bague-support annulaire (24, 29) et la première partie (25a) formant obturateur de l'élément (25) en matière élastomère, de sorte que la troisième partie (25c) en forme de manchon qui se raccorde à ladite première partie (25a) de l'élément (25) est située radialement à l'intérieur du ressort de compression (20).

**Patentansprüche**

1. Unterdruckkraftverstärker mit :

einem Kolben (11) der durch einen Druckunterschied zwischen zwei Kammern (3, 4) einer Einfassung (1) betätigbar ist,
einem Tauchkolben (12), der in einer Axialbohrung (13) des Kolbens (11) durch ein Krafteintragsmittel (14, 15) verschiebbar ist,
ersten und zweiten koaxiale, ringförmige Sitze (17, 18), die auf dem Kolben (11) bzw. dem Tauchkolben (12) ausgebildet sind,
einem Ventil (16), das selektiv mit den ersten und zweiten Sitzen zusammenwirken kann, um abhängig von der axialen Position des Tauchkolbens bezüglich des Kolbens den Druckunterschied zu variieren, wobei das Ventil aufweist:

einen ringförmigen Träger (24), der in einem axialen Abstand von den ersten und zweiten Sitzen (17, 18) in einem verbreiterten Abschnitt (13c) der axialen Bohrung (13) des Kolbens (11) angeordnet ist, und ein Element (25) aus einem Elastomermaterial mit einem einen Verschluss bildenden ersten ringförmigen Abschnitt (25a), der axial selektiv gegen die ersten und zweiten Sitze (17, 18) in Anschlag gebracht werden kann, sowie einen zweiten, eine Dichtung zwischen dem ringförmigen Halter (24) und dem verbreiterten Abschnitt (13c) der Axialbohrung (13) des Kolbens (11) bildenden zweiten ringförmigen Abschnitt (25b) und einen dritten Abschnitt (25c) in Form einer Hülse, welche die ersten und zweiten Abschnitte (25a, 25b) des Elements (25) aus Elastomermaterial miteinander verbindet und die eine Innenfläche, die ständig einem relativ hohen Druck ausgesetzt ist, und eine Außenfläche, die einem relativ niedrigen Druck ausgesetzt ist, aufweist

einem Ring (29), der in engem Kontakt mit dem vergrößerten Abschnitt (13c) der Axialbohrung (13) und mit einem Abschnitt der Außenfläche des dritten Abschnitts (25c) des Elements (25) aus Elastomermaterial steht,

**dadurch gekennzeichnet, dass** der ringförmige Halter (24) seitlich von der Außenfläche des dritten Abschnitts (25c) des Elements (25) aus Elastomermaterial angeordnet und einstückig mit dem Ring (29) ausgebildet ist.

2. Kraftverstärker gemäß Anspruch 1, **dadurch gekennzeichnet, dass** der ringförmige Ringhalter (24, 29) einen Innendurchmesser aufweist, dessen Wert zwischen den Werten der Durchmesser der ersten und zweiten Sitze (17, 18) liegt.

3. Kraftverstärker gemäß Anspruch 2, **dadurch gekennzeichnet, dass** der dritte hülsenförmige Abschnitt (25c) des Elements (25) aus Elastomermaterial im Bereich des Innendurchmessers des ringförmigen Ringhalters (24, 29) einen Innendurchmesser aufweist, dessen Wert im Wesentlichen dem Wert des Durchmessers des zweiten Sitzes (18) entspricht.

4. Kraftverstärker gemäß einem der Ansprüche 1 bis 3, **dadurch gekennzeichnet, dass** der dritte hülsenförmige Abschnitt (25c) mit dem ersten ringförmigen Abschnitt (25a), welcher den Verschluss des Elements (25) aus Elastomermaterial bildet, in dem Bereich außerhalb des ersten Abschnitts (25a) verbunden ist.

5. Kraftverstärker gemäß einem der Ansprüche 1 bis 3, **dadurch gekennzeichnet, dass** der dritte hülsenförmige Abschnitt (25c) mit dem ersten ringförmigen Abschnitt (25a), welcher den Verschluss des Elements (25) aus Elastomermaterial bildet, in dem inneren Bereich des ersten Abschnitts (25a) verbunden ist.

6. Kraftverstärker gemäß einem der Ansprüche 1 bis 5, **dadurch gekennzeichnet, dass** eine Druckfeder (20) axial zwischen dem ringförmigen Ringhalter (24, 29) und dem ersten Abschnitt (25a), welcher den Verschluss des Elements (25) aus Elastomermaterial bildet, so angeordnet ist, dass der dritte hülsenförmige Abschnitt (25c), der mit dem ersten Abschnitt (25a) des Elements (25) verbunden ist, radial im Innem der Druckfeder (20) angeordnet ist.

## Claims

1. Depression force amplifier comprising:

   a piston (11) that can be actuated by a differential pressure between two chambers (3, 4) of an enclosure (1),
a plunger (12) that can be moved in an axial bore (13) of the piston (11) by a force input member (14, 15),
first and second coaxial annular seats (17, 18) formed respectively on the piston (11) and on the plunger (12),
a valve member (16) capable of interacting selectively with the first and second seats to cause the said differential pressure to vary according to the axial position of the plunger relative to the piston, the said valve member comprising:

   an annular support (24) placed at an axial distance from the first and second seats (17, 18) in an enlarged portion (13c) of the axial bore (13) of the piston (11), and
   an element (25) made of elastomer having a first annular portion (25a) forming a stopper, which is capable of being placed axially pressing selectively against the first and second seats (17, 18), a second annular portion (25b) forming a seal between the annular support (24) and the enlarged portion (13c) of the axial bore (13) of the piston (11), and a third portion (25c) in the form of a coupling sleeve which connects the said first and second portions (25a, 25b) of the element (25) made of elastomer and which has an internal surface permanently exposed to a relatively high pressure and an external surface exposed to a relatively low pressure,
   a ring (29) in close contact with the enlarged portion (13c) of the axial bore (13) and with a portion of the external surface of the third portion (25c) of the element (25) made of elastomer,

   **characterized in that** the annular support (24) is placed on the side of the external surface of the third portion (25c) of the element (25) made of elastomer and is made in a single piece with the ring (29).

2. Force amplifier according to Claim 1, **characterized in that** the annular support ring (24, 29) has an internal diameter whose value lies between the values of the diameters of the first and second seats (17, 18).

3. Force amplifier according to Claim 2, **characterized in that** the third coupling sleeve-shaped portion (25c) of the element (25) made of elastomer has, in the region of the internal diameter of the annular support ring (24, 29), an internal diameter whose value is substantially equal to the value of the diameter of the second seat (18).

**4.** Force amplifier according to any one of Claims 1 to 3, **characterized in that** the third coupling sleeve-shaped portion (25c) is connected to the first annular portion (25a) forming a stopper of the element (25) made of elastomer in the external region of the said first portion (25a).

**5.** Force amplifier according to any one of Claims 1 to 3, **characterized in that** the third coupling sleeve-shaped portion (25c) is connected to the first annular portion (25a) forming a stopper of the element (25) made of elastomer in the internal region of the said first portion (25a).

**6.** Force amplifier according to any one of Claims 1 to 5, **characterized in that** a compression spring (20) is placed axially between the annular support ring (24, 29) and the first stopper-forming portion (25a) of the element (25) made of elastomer, so that the third coupling sleeve-shaped portion (25c) which is connected to the said first portion (25a) of the element (25) is situated radially inside the compression spring (20).

FIG.1

FIG.2A

FIG.2B

FIG.3

FIG.4

FIG.5